# EUROPEAN PATENT SPECIFICATION

(11) **EP 1 123 651 B1**
(45) Date of publication and mention of the grant of the patent: **08.09.2004**
(21) Application number: 01201342.1
(22) Date of filing: 16.03.1993
(51) Int. Cl.: A01J 5/01, A01K 11/00, A01J 5/04

(54) **A method and implement of computer-controlled automatically milking animals in a milking parlour**
Verfahren und Vorrichtung zum automatischen rechnergesteuerten Melken von Tieren in einer Melkanlage,
Méthode et dispositif pour la traite, contrôlée automatiquement par ordinateur, d'animaux dans une salle de traite

(30) Priority: 30.03.1992 NL 9200582
(43) Date of publication of application: 16.08.2001
(62) Divisional of application: 97203406.0
(73) Proprietor: MAASLAND N.V., 3147 PA Maassluis (NL)
(72) Inventor: Van den Berg, Karel, 2971 BR Bleskensgraaf (NL); Fransen, Renatus Ignatius Josephus, 3135 ZD Vlaardingen (NL)
(74) Representative: Corten, Maurice Jean F.M.

(56) References cited:
- EP-A- 0 385 539
- DE-A- 3 502 858
- DE-A- 4 109 253
- US-A- 4 537 150
- US-A- 4 569 236

## Description

The invention relates to a method of computer-controlled automatically milking animals in a milking parlour, in which milking parlour samples of milk supplied by the animals can be collected.

A method for collecting samples of milk supplied by animals is known from for instance US-A-4,569, 236. In this document there is described a sampling device for obtaining a plurality of milk samples from the teats of a cow. The device comprises a body with sockets to receive the ends of tubes connected to teat cups. The device furthermore comprises passages in the body connecting the sockets with individual sample cuvettes and a common valve member for opening or closing the passage between the sockets and the sample cuvettes. The above described sampling device has the disadvantage that during sampling excessive sample fluid is drained away from the sample passage via an overflow port. Further the application of such a sampling device is difficult in a method for computer-controlled automatically milking animals.

It is an object of the invention to provide a method of computer-controlled automatically milking animals, in which sampling of milk can reliably and easily be performed and wherein the disadvantages of the application of the above known sampling device are avoided to at least a significant extent.

According to the invention this is archieved in a first method comprising the steps of:
- identifying an animal entering a milking parlour;
- using the animal identification system, recalling data of a previous milking of said animal from a computer memory and determining by means of the computer, for example on the basis of a time table, and said data, whether a sample of milk should be taken of the animal;
- milking the animal;
- if a sample of milk should be taken, collecting, during discharging the milk to a milk tank by pumping the quantity of milk supplied by the animal in each milking run in predetermined volumes from a milk meter to the milk tank, a predetermined fraction of these volumes in a sample-taking device, and
- storing the data of the animal together with the instant at which the sample was taken, in the memory of the computer.

In a second method the object of the invention is archieved by the steps of:
- identifying an animal entering a milking parlour;
- using the animal identification system, recalling data of a previous milking of said animal from a computer memory and determining by means of the computer, for example on the basis of a time table, and said data, whether a sample of milk should be taken of the animal;
- milking the animal;
- if a sample of milk should be taken, collecting, during discharging the milk to a milk tank by pumping the quantity of milk supplied by the animal in each milking run in its totality from a milk meter to the milk tank, a predetermined fraction of this quantity of milk in a sample-taking device, and
- storing the data of the animal together with the instant at which the sample was taken, in the memory of the computer.

In the latter method, prior to or during the sample-taking operation air may be passed through the milk contained in the milk meter. By bubbling air through the milk, it is achieved that the milk is first adequately stirred before a sample is taken therefrom. This reduces the risk of the ultimate sample not being representative enough for the composition of the milk supplied by an animal in each milking run.

In the first method a milk meter is used of the type wherein the quantity of milk supplied by the animal in each milking run is pumped to a milk tank in predetermined volumes, while in the second method a milk meter is used of the type wherein the quantity of milk supplied by the animal in each milking run is pumped in its totality from a milk meter to a milk tank. Both types of milk meters are generally known. As the latter type of milk meter may be a relatively large milk glass, the application of bubbling air therein is favourable.

The invention further relates to an implement for automatically milking animals by applying each one of the above methods in a milking parlour with an animal identification system, a milk meter to which the milk obtained by an animal is supplied, and a milk tank to which the milk from the milk meter is pumped. The implement is characterized in that it is further provided with a sample-taking device with one or a plurality of milk collecting elements, which sample-taking device is connectable to a tapping point in the milk line between the milk meter and the milk tank, and in which sample-taking device a predetermined fraction of the quantity of milk, supplied by the animal in each milking run in predetermined volumes from the milk meter to the milk tank, or of the quantity of milk, supplied by the animal in each milking run in its totality from the milk meter to the milk tank, can be collected.

The invention will further be explained with reference to the accompanying drawing, in which:
Figure 1 shows a milking parlour, in which a sample-taking implement for taking a fraction of milk is provided;
Figure 2 shows a first embodiment of a sample-taking implement in accordance with the invention;
Figure 3 shows a second embodiment of a sample-taking implement in accordance with the invention;
Figure 4 is a cross-sectional view of the second sample-taking implement, which can also form part of the first embodiment shown in Figure 2;
Figure 5 is a plan view of the carrousel-like rotary carrier implement shown in Figure 4, taken on the line V-V.

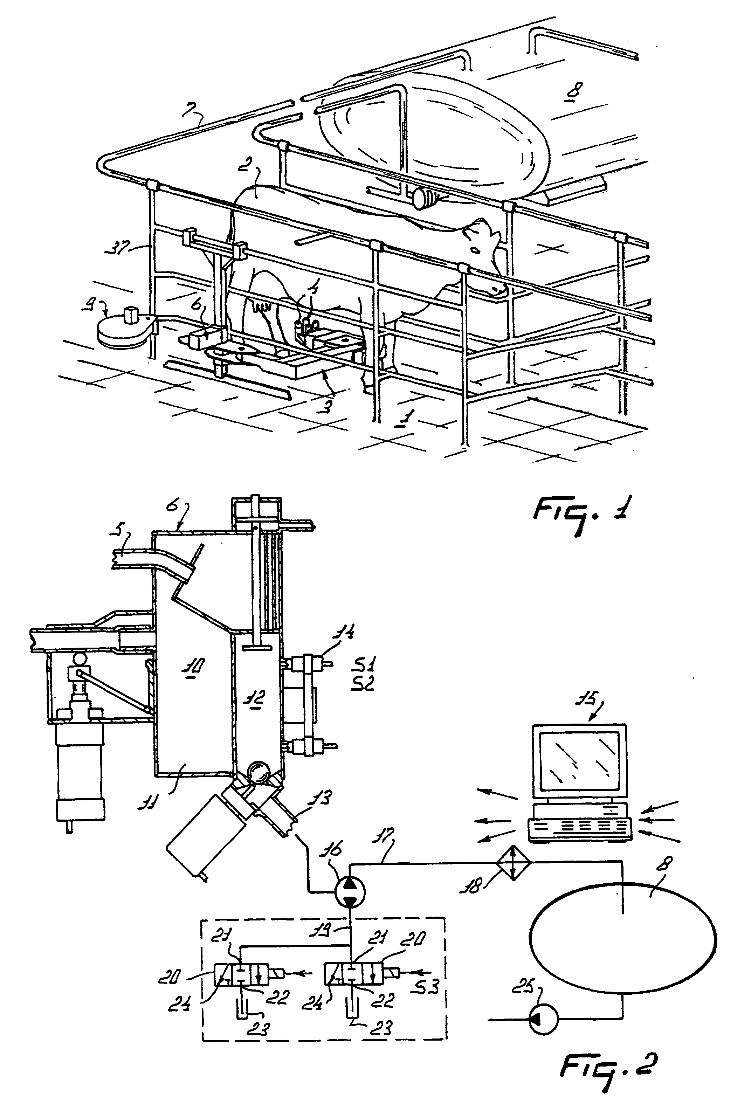

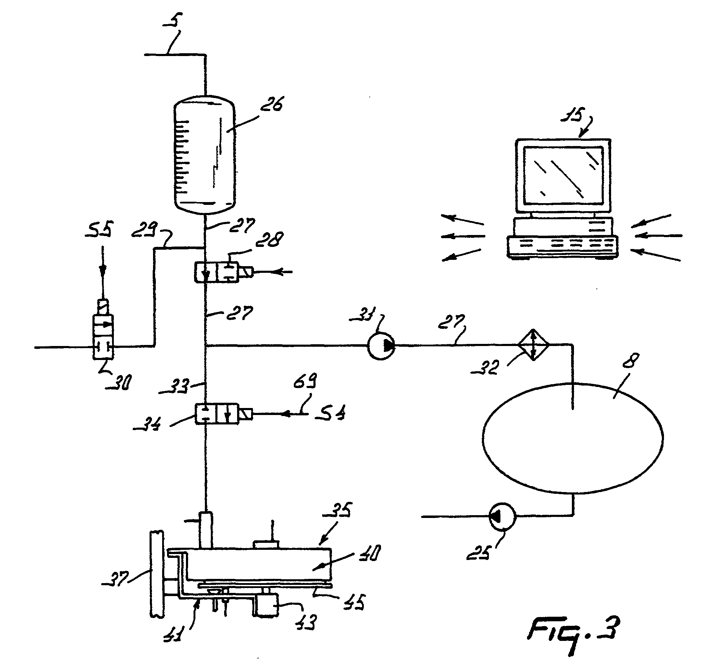

Figure 1 shows a schematic arrangement of a milking plant for milking cows. The milking plant comprises a milking parlour 1, in which a cow 2 is present. Located in the milking parlour 2 is a milking robot 3, which at its end is provided with four teat cups 4. The teat cups 4 are automatically connectable by means of the milking robot 3 to the teats of the cow 2. The invention is, however, entirely independent of the manner in which the teat cups 4 are connected; the teat cups 4 can be connected both together, combined in one single milking claw, and separately and independently of each other to respective teats of the udder of the cow 2. The milk obtained from each udder quarter with the aid of the teat cups 4 can be applied to a milk measuring device 6 through separate lines or one common line 5, as the case may be (see Figure 2). From the milk measuring device 6 the milk is supplied to a milk cooling tank 8 via a milk line 7.

In addition, the milking plant includes, arranged between the milk measuring device 6 and the milk cooling tank 8, a sample-taking implement 9, with the aid of which a fraction of the milk supplied by the cow 2 in each milking run can be automatically collected, which fraction amounts to e.g. 1% of the total quantity of milk supplied by the cow 2.

Figure 2 shows a basic arrangement of the milking plant, in which it is schematically shown how the sample-taking implement 9 is incorporated in the milking plant.

The milking plant as shown in Figure 2 includes a milk flow rate meter 10, which is extensively described in the Netherlands patent application 8900479. The milk flow rate meter 10 comprises a milk reservoir 11 and a measuring chamber 12, the milk flowing under vacuum via the line 5 connected to the teat cup 4 from the milk reservoir 11 into the measuring chamber 12. During milking of the cow 2, the milk is pumped from the measuring chamber 12, each time in a defined quantity, into a discharge line 13 by means of compressed air. The measuring chamber 12 includes a first milk level sensor 14, with the aid of which it is detected when the milk is present in the milk chamber 12 in a defined quantity. As soon as the milk level in the measuring chamber 12 has reached the level at which this sensor 14 is located, then this sensor 14 supplies a control signal S1 (see Figure 2), whereafter the measuring chamber 12 can be pumped out. The first milk level sensor 14 can also apply a control signal S2 to a computer 15, in which the quantity of milk obtained is updated for each animal. In this situation, each animal, as soon as it enters the milking parlour 1 is "recognized" by the computer 15 with the aid of an animal identification system, not further shown.

Pumping out of the measuring chamber 12 is effected by means of a pump 16 which has a constant stroke value and in which the milk can be pumped out in two directions of flow. The largest fraction of the quantity of milk pumped out by the pump 16 is pumped to the milk cooling tank 8 via a first discharge line 17. The first discharge line 17 incorporates a cooler 18, with the aid of which the milk can be cooled to a predetermined temperature before it is stored in the milk cooling tank 8. In addition, connected to the pump 16 is a second discharge line 19, with the aid of which a predetermined small fraction of milk, e.g. 1% of the milk passed through the line 13, can be discharged to the sample-taking implement 9. The second discharge line 19 may be split into two or more further discharge lines, in each of which a switching element 20 is included. The switching element 20 is preferably an electromagnetically-controlled 3/3 valve. Each switching element 20 has three connecting ports and can be adjusted to three switching positions. Connected to the first connection port 21 is the second discharge line 19, through which milk can be passed to the switching element 20. A relatively short discharge line, by means of which the milk can be discharged to a milk collecting element 23, is connected to the second connection port 22. Connected to the third connection port 24 is a discharge line, with the aid of which rinsing water for cleaning the milk line system can be discharged, the rinsing water being supplied during the cleaning operation through the second line 19.

The milk cooling tank 8 is further provided with a second pump 25, by means of which the tank can be pumped out.

The sample-taking implement shown in Figure 2 operates as follows:

A cow 2 enters the milking parlour 1, whereafter the teat cups 4 are connected to the teats with the aid of the milking robot 3. Milk is collected in the measuring chamber 12 via the line 5. After a predetermined period of time the milk level sensor 14 applies a signal S1 to the computer 15, whereafter the computer 15 applies a signal to the pump 16, in order that the measuring chamber 12 is pumped out. The identity of the cow 2 has already been determined by means of the animal identification system, and a decision has been taken whether the cow 2 is to be sampled. If the computer 15 determines that a milk sample is to be taken from the cow 2, then the computer 15 applies a signal S3 to one of the switching elements 20, to provide that a fraction of the milk is collected in a milk collecting element 23. Before one of the switching elements 20 receives a signal S3 from the computer 15, the switching elements 20 are in a first position, which implies that the connections between the connecting ports 21, 22 and 24 are interrupted. If a switching element 20 receives a signal S3 from the computer 15, then the relevant switching element 20 is set to a second position, which implies that a connection is effected between the first connecting port 21 and the second connecting port 22. Of the milk pumped from the measuring chamber 12 a fraction is then collected in the relevant milk collecting element 23. In this situation, the pump 16 may have been set such that e.g. 99% of the milk is discharged to the cooling tank 8 via the first discharge line 17, whereas 1% is discharged through the second discharge line to the milk collecting element 23. Filling and emptying the measuring chamber 12 is repeated a few times during one milking run, since the contents of the milking chamber 12 have been chosen such that it is less than the quantity of milk supplied by each cow during the milking run. Each time the measuring chamber 12 is pumped out, a fraction of milk is thus collected in the milk collecting element 23. Since the milk yield per cow may differ, and consequently also the number of times the measuring chamber 12 is emptied, there is a risk that in each milk collecting element 23 and/or in each sampling operation of a cow a different quantity of milk is each time collected in a milk collecting element 23. To prevent this, the computer 15 can be programmed such that X-times per milking run a sampling operation is performed instead of each time the measuring chamber 12 empties. It is also possible to store in the computer 15 in a memory which milk collecting element 23 is associated with which cow, so that afterwards it can be read from the memory which milk sample is obtained from which cow.

After sampling of a cow, the line system can be cleaned, using a rinsing solution, by adjusting the switching element 20 to a third position by means of the computer 15. Before an other cow enters the milking parlour 1, the milk measuring device 6 and the sample-taking implement can be cleaned in this way, so that milk from one cow is not mixed with milk of an other cow.

In addition to the above-described manner of automatically taking a milk sample at a milk flow rate meter, the invention also relates to automatically taking a milk sample with the aid of a milk measuring tube 26. During a milking run of an animal, the total quantity of recovered milk is collected in the milk measuring tubes 26 via line 5. The bottom side of the milk measuring tube 26 is provided with a discharge line 27, in which a second switching element 28 is incorporated. With the aid of the second switching element 28 it is possible to close the discharge line 27. The second switching element 28 may be in the form of an electromagnetically operable 2/2-valve, the arrangement being such that in a first position the milk can freely flow through the discharge line 27 and in a second position the milk flow is interrupted. Between the milk measuring tube 26 and the second switching element 28 a third line 29 is connected to the discharge line 27. The third line 29 incorporates a third switching element 30, with the aid of which the third line 29 can be closed. This third switching element 30 may also be in the form of an electromagnetically operable 2/2-valve. In that section of the discharge line 27, located between the second switching element 28 and the milk cooling tank 8, a pump 31 and a cooler 32 are incorporated. Using the pump 31, which preferably is designed as a unilateral flow pump, the milk is pumped from the measuring tube 26 to the milk cooling tank 8. A fourth line 33, in which a fourth switching element 34 is incorporated, is provided in the discharge line 27 between the second switching element 28 and the pump 31. The switching element 34, and also the second switching element 28, may be designed as an electromagnetically operable 2/2- valve. By means of the fourth switching element 34 the milk supply to a second sample-taking implement 35 can be controlled.

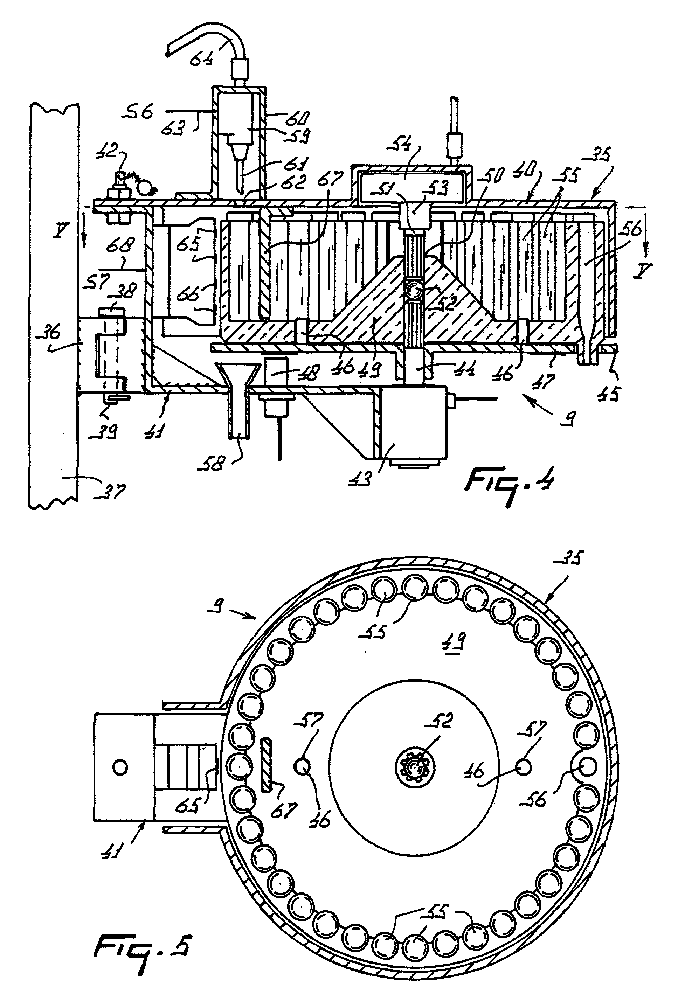

The second sample-taking implement is shown in greater detail in Figures 4 and 5. The second sample-taking implement 35 is connected via a hinge 36 to a frame beam 37 and is pivotal about the vertical shaft 38. The pivot shaft 38 is locked by means of a detachable pin 39. After the pin 39 and shaft 38 have been removed, the second sample-taking implement 35 can be uncoupled from the frame beam 37. The second sample-taking implement 35 is accommodated in a housing which consists of two parts, the first part 40 of the housing being constituted by a cover-like portion having upright edges and the second part 41 being constituted by a L-shaped strip which is connected to the hinge 36. The first and the second parts of the housing are interconnected by means of a sealable bolt 42. The lower portion of the L- shaped strip 41 extends to as far as a shaft through the midway point of the cover-like portion of the first part 40 of the housing. A motor 43 is disposed near the end of the L- shaped strip 41. The motor 43 is preferably a servomotor- controllable electric motor. The electric motor 43 has a vertical shaft 44, which at its end is provided with splines. Near the lower end of the vertical shaft 44, a circular bottom plate 45 is disposed, which is provided with two pin- like vertical projections 46. At its bottom side, the bottom plate 45 is provided, arranged in a circle, with identification codes 47, which may be in the form of a bar code. The electric motor 43 can be controlled on the basis of the identification code 47. The identification code 47 is read with the aid of a sensor 48 arranged on the second part 41 of the housing. The sensor 48 may be in the form of an optical sensor.

A rotary carrousel-like test-tube carrier 49, which near its midway point is provided with a bore 50 in which splines are accommodated, bears on the bottom plate 45. The bore 50 further accommodates a second shaft 51 which is also provided with splines. At its upper side, the second shaft 51 is supported in a bearing 53 which is connected to a memory unit 54 arranged in the upper side of the first part 40 of the housing. The memory unit 54 is disposed in a box- like bulging portion of the first part 40 of the housing. The second shaft 51 further bears on a ball 52, which bears on the vertical shaft 44.

In the test-tube carrier 49 there are placed, in the form of a circle, a number of test tubes 55, which number preferably exceeds 25. Furthermore the test-tube carrier 49 incorporates a discharge nozzle 56, the bottom end of which fits in a recess of the bottom plate 45. The test-tube carrier 49 is additionally provided with two bores 57, in which the pin-like vertical projections 46 of the bottom plate 45 fit. With the aid of the pin-like projections 46 and the discharge nozzle 56, the test-tube carrier 49 can invariably be placed in the same position relative to the bottom plate 45.

The L-shaped strip of the second part 41 of the housing is provided with a bore, through which a funnel 58 is inserted. Using the stepper motor 43, the test-tube carrier 49 can be rotated such that the discharge nozzle 56 ends over the funnel 58. At some height, straight over the funnel 58, there is disposed on the cover-like first part 40 of the housing an injection member 59, with the aid of which the test tubes 55 can be filled with milk. The injection member 59 is surrounded by a sealed housing 60, in which a hypodermic needle 61, which is movable in the vertical direction, is positioned. The needle 61 can be inserted through an aperture 62 in the upper wall of the first part 40 of the housing. Motion of the needle 61 is controlled by a signal S6 supplied via an electric line 63 by the computer 15. At the upper side of the injection member 59 there is a supply line 64, by means of which milk or a rinsing solution can be conveyed to the needle 61.

Level-determining means 65, with the aid of which the level in a test tube 55 can be determined, are attached to the interior wall of the upright portion of the L-shaped strip. In this embodiment, the level-determining means 65 are formed by four level sensors 66. Each level sensor 66 transmits a signal which is reflected from a reflector strip 67, whereafter the signal is again picked-up by the sensors 66. The sensors 66 may be constituted by optical or acoustical sensors. The reflector 67 is constituted by a L- shaped strip attached to the bottom side of the first part 40 of the housing. The reflector 67 extends downwardly in a vertical direction, to as far as the bottom of the test-tube carrier 49, and is located at the interior side of the circularly arranged test tubes 55. Between the reflector strip 67 and the level sensors 66 there is always one test tube 55 or the discharge nozzle 59. The computer 15 updates filling of the test tube 55; when a given test tube 55 is filled with milk, then at a given instant the milk level in the test tube will rise to such a height that a light beam supplied by a sensor 66 is interrupted by the milk, whereafter a signal S7 is applied via an electric line 68 to the computer 15 as an indication that the milk in the test tube 55 has reached a certain level.

The second sample-taking implement 35 shown in Figures 3, 4 and 5 operates as follows:

A cow 2 enters the milking parlour 1, whereafter the teat cups 4 are connected to the teats with the aid of the milking robot 3. Using the animal identification system, the data of cow 2 are entered into the computer memory and by means of the computer 15 it is determined, for example on the basis of a time table, whether a sample should be taken of the cow 2. Once the decision has been made that the cow 2 is to be sampled, then the computer 15 applies a signal S6 via the electric line 63 to the injection member 59, whereafter the needle 61 is moved downwardly through the aperture 62 in the cover-like first part of the housing 40. The point of the needle 61 is thereafter inserted through an aperture in a rubber sealing cap of the test tube 55 into the test tube 55.

After it has been detected by a (non-shown) sensor that all the milk has been removed from the udder of cow 2, the milk collected in the milk measuring tube 26 is first adequately stirred before it is sampled. For that purpose the computer 15 applies a signal S5 to the third switching element 30, whereafter air is passed through the third line 29 to the milk measuring tube 26. The air supplied via the line 29 bubbles upwards from the bottom of the milk measuring tube 26 through the milk, as a result of which the milk is adequately stirred. After a predetermined period of time the third switching element 30 is again energized by the computer 15 and the supply of air to the milk measuring tube 26 is stopped. Thereafter the computer 15 energizes the second switching element 28, the fourth switching element 43 and the pump 31. The milk will now flow from the fourth line 33 via the supply line 64 to the injection member 59, whereby milk flows into the test tube 55 via the hypodermic needle 61. With the aid of signals applied by the level sensors 66 via line 68 to computer 15, the quantity of milk collected in the test tube 55 can be determined. As soon as the milk in the test tube 55 reaches a level which has been preset in the computer 15, then the computer 15 applies via an electric line 69 a signal S4 to the fourth switching element 34, in order that the switching element interrupts the milk flow. As soon as the supply of the milk to the test tube 55 has been interrupted, the data of the sampled cow 2 are stored together with the instant at which the sample was taken and the identification code 47 associated with the relevant sample in a memory of the computer 15 and in the memory unit 54. When the sampled cow 2 enters the milking parlour 1 again after X hours for the purpose of being milked, then on the basis of the data stored in the memory it is determined whether the cow 2 is to be sampled again. When the cow 2 is sampled again, then the identification code 47 belonging to cow 2 is read from the memory of the computer 15, and with the aid of the stepper motor 43 the proper test tube 55 is rotated to under the injection member 59. This is effected on the basis of the register stored in the computer 15, in which register a bar code is reserved for each test tube 55, and in which each bar code refers to one cow already sampled in the milking parlour 1. As soon as the bar code associated with cow 2 has been detected, it is compared to the bar code present under the injection member 59. If there is a difference between these two bar codes, then on the basis of the bar codes present in the register it is determined where the desired test tube 55 is located relative to the test tube located under the injection member 59. With the aid of the stepper motor 43, the desired test tube 55 is thereafter moved to under the injection member 59, whereafter the cow 2 can again be sampled. After sampling of cow 2, the discharge nozzle 56 is rotated in a similar manner to under the injection member 59 and the milk lines as well as the hypodermic needle 61 are cleaned with the rinsing solution, whereafter the sample-taking implement is again ready for a subsequent animal.

When at a given instant a sufficient number of samples have been collected, then, by removing the shaft 38 from the hinge 36 the second sample-taking implement 35 can be replaced by a different sample-taking implement. It is also possible to replace only the test-tube carrier 49 together with the memory unit 54.

It will be obvious that the second sample-taking implement can also be used with the milk measuring implement 6 described in Figure 2. Similarly, the sample-taking implement 9 can be used with the milk measuring tube 26 shown in Figure 3.

## Claims

1. A method of computer-controlled automatically milking animals in a milking parlour, in which milking parlour samples of milk supplied by the animals can be collected, the method comprising successively the steps of:
- identifying an animal entering a milking parlour;
- using the animal identification system, recalling data of a previous milking of said animal from a computer memory and determining by means of the computer, for example on the basis of a time table, and said data, whether a sample of milk should be taken of the animal;
- milking the animal;
- if a sample of milk should be taken, collecting, during discharging the milk to a milk tank by pumping the quantity of milk supplied by the animal in each milking run in predetermined volumes from a milk meter to the milk tank, a predetermined fraction of these volumes in a sample-taking device, and
- storing the data of the animal together with the instant at which the sample was taken, in the memory of the computer.

2. A method of computer-controlled automatically milking animals in a milking parlour, in which milking parlour samples of milk supplied by the animals can be collected, the method comprising successively the steps of:
- identifying an animal entering a milking parlour;
- using the animal identification system, recalling data of a previous milking of said animal from a computer memory and determining by means of the computer, for example on the basis of a time table, and said data, whether a sample of milk should be taken of the animal;
- milking the animal;
- if a sample of milk should be taken, collecting, during discharging the milk to a milk tank by pumping the quantity of milk supplied by the animal in each milking run in its totality from a milk meter to the milk tank, a predetermined fraction of this quantity of milk in a sample-taking device, and
- storing the data of the animal together with the instant at which the sample was taken, in the memory of the computer.

3. Method as claimed in claim 2, **characterized in that** prior to or during the sample-taking operation air is passed through the milk contained in the milk meter.

4. Implement for automatically milking animals by applying the method as claimed in claim 1 or 2 in a milking parlour with an animal identification system, a milk meter to which the milk obtained by an animal is supplied, and a milk tank to which the milk from the milk meter is pumped, **characterized in that** the implement is further provided with a sample-taking device with one or a plurality of milk collecting elements, which sample-taking device is connectable to a tapping point in the milk line between the milk meter and the milk tank, and in which sample-taking device a predetermined fraction of the quantity of milk, supplied by the animal in each milking run in predetermined volumes from the milk meter to the milk tank, or of the quantity of milk, supplied by the animal in each milking run in its totality from the milk meter to the milk tank, can be collected.

5. Implement for automatically milking animals as claimed in claim 4, **characterized in that** between the tapping point and the sample-taking device an intermediate milk line is provided, said intermediate milk line comprising a switching element to control the supply of milk to the sample-taking device.

6. Implement for automatically milking animals as claimed in claim 4 or 5, **characterized in that** the milk collecting element of the sample-taking device can be filled by means of an injection member connected to said intermediate milk line.

7. Implement for automatically milking animals as claimed in any one of the claims 4-6, **characterized in that** the sample taking device includes a rotary carrier comprising a plurality of milk collecting elements.

8. Implement for automatically milking animals as claimed in claim 7, **characterized in that** the rotary carrier is servo-controllable to positions indicated by a computer.

9. Implement for automatically milking animals as claimed in claim 7, **characterized in that** the milk collecting elements are contained in a holder which can be detached from the housing of the rotary carrier.

10. Implement for automatically milking animals as claimed in claim 7, **characterized in that** the sample-taking device can be sealed and can be detachably attached to a frame of the milking location or in the milking parlour.

## Patentansprüche

1. Verfahren zum rechnergesteuerten automatischen Melken von Tieren in einem Melkstand, wobei in dem Melkstand Proben der von den Tieren gelieferten Milch entnommen werden können, wobei das Verfahren die folgenden aufeinanderfolgenden Verfahrensschritte umfaßt:
- Identifizieren eines einen Melkstand betretenden Tieres;
- Einsetzen des Tieridentifikationssystems, Abrufen von Daten über ein vorhergehendes Melken des Tieres aus einem Computerspeicher und Entscheiden mit Hilfe des Computers, beispielsweise auf der Basis eines Zeitplanes und der Daten, ob eine Milchprobe von dem Tier genommen werden soll;
- Melken des Tieres;
- im Falle einer Probenentnahme während des Ableitens der Milch in einen Milchtank dadurch, daß die von dem Tier bei jedem Melkvorgang gelieferte Milchmenge in vorgegebenen Mengen von einem Milchmengenmesser in den Milchtank gepumpt wird, Aufnehmen eines vorgegebenen Teiles dieser Mengen in einer Probenentnahmevorrichtung und
- Speichern der Daten des Tieres zusammen mit dem Zeitpunkt der Probenentnahme im Speicher des Computers.

2. Verfahren zum rechnergesteuerten automatischen Melken von Tieren in einem Melkstand, wobei in dem Melkstand Proben der von den Tieren gelieferten Milch entnommen werden können, wobei das Verfahren die folgenden aufeinanderfolgenden Verfahrensschritte umfaßt:
- Identifizieren eines einen Melkstand betretenden Tieres;
- Einsetzen des Tieridentifikationssystems, Abrufen von Daten über ein vorhergehendes Melken des Tieres aus einem Computerspeicher und Entscheiden mit Hilfe des Computers, beispielsweise auf der Basis eines Zeitplanes und der Daten, ob eine Milchprobe von dem Tier genommen werden soll;
- Melken des Tieres;
- im Falle einer Probenentnahme während des Ableitens der Milch in einen Milchtank dadurch, daß die von dem Tier bei jedem Melkvorgang gelieferte Milchmenge in ihrer Gesamtheit von einem Milchmengenmesser in den Milchtank gepumpt wird, Aufnehmen eines vorgegebenen Teiles dieser Milchmenge in einer Probenentnahmevorrichtung und
- Speichern der Daten des Tieres zusammen mit dem Zeitpunkt der Probenentnahme im Speicher des Computers.

3. Verfahren nach Anspruch 2,
**dadurch gekennzeichnet, daß** vor oder während des Probenentnahmevorganges Luft durch die im Milchmengenmesser enthaltene Milch geleitet wird.

4. Vorrichtung zum automatischen Melken von Tieren durch Anwendung des Verfahrens nach Anspruch 1 oder 2 in einem Melkstand mit einem Tieridentifikationssystem, einem Milchmengenmesser, zu dem die von einem Tier gewonnene Milch geleitet wird, und einem Milchtank, in den die Milch von dem Milchmengenmesser gepumpt wird,
**dadurch gekennzeichnet, daß** die Vorrichtung ferner mit einer Probenentnahmevorrichtung mit einem oder mehreren Milchaufnahmeelementen versehen ist, wobei die Probenentnahmevorrichtung an eine Abgreifstelle in der Milchleitung zwischen dem Milchmengenmesser und dem Milchtank anschließbar ist, und wobei in der Probenentnahmevorrichtung ein vorgegebener Teil der Milchmenge, die von dem Tier bei jedem Melkvorgang geliefert und in vorgegebenen Mengen von dem Milchmengenmesser in den Milchtank gepumpt wird, oder der Milchmenge, die von dem Tier bei jedem Melkvorgang geliefert und in ihrer Gesamtheit von dem Milchmengenmesser in den Milchtank gepumpt wird, aufgenommen werden kann.

5. Vorrichtung zum automatischen Melken von Tieren nach Anspruch 4,
**dadurch gekennzeichnet, daß** zwischen der Abgreifstelle und der Probenentnahmevorrichtung. eine Milchzwischenleitung angeordnet ist, wobei die Milchzwischenleitung ein Schaltelement umfaßt, um die Zufuhr von Milch zu der Probenentnahmevorrichtung zu steuern.

6. Vorrichtung zum automatischen Melken von Tieren nach Anspruch 4 oder 5,
**dadurch gekennzeichnet, daß** das Milchaufnahmeelement der Probenentnahmevorrichtung mittels eines Einspritzelementes befüllbar ist, das mit der Milchzwischenleitung verbunden ist.

7. Vorrichtung zum automatischen Melken von Tieren nach einem der Ansprüche 4 bis 6,
**dadurch gekennzeichnet, daß** die Probenentnahmevorrichtung einen drehbaren Träger enthält, der eine Vielzahl von Milchaufnahmeelementen umfaßt.

8. Vorrichtung zum automatischen Melken von Tieren nach Anspruch 7,
**dadurch gekennzeichnet, daß** der drehbare Träger von einem Servomotor zu steuern und in durch einen Computer bezeichnete Positionen einstellbar ist.

9. Vorrichtung zum automatischen Melken von Tieren nach Anspruch 7,
**dadurch gekennzeichnet, daß** die Milchaufnahmeelemente in einem Halter gehalten sind, der von dem Gehäuse des drehbaren Trägers gelöst werden kann.

10. Vorrichtung zum automatischen Melken von Tieren nach Anspruch 7,
**dadurch gekennzeichnet, daß** die Probenentnahmevorrichtung versiegelt und lösbar an einem Rahmen der Melkstation oder im Melkstand angebracht werden kann.

## Revendications

1. Méthode pour la traite, contrôlée automatiquement par ordinateur, d'animaux dans une salle de traite, dans laquelle des échantillons de lait fourni par les animaux dans la salle de traite, peuvent être recueillis, la méthode comprenant les étapes successives consistant à :
- identifier un animal entrant dans une salle de traite ;
- utiliser le système d'identification d'animal pour rappeler les données d'une traite antérieure dudit animal à partir d'une mémoire d'ordinateur et pour déterminer au moyen de l'ordinateur, par exemple sur la base d'un emploi du temps et desdites données, si un échantillon de lait doit être prélevé de l'animal ;
- traire l'animal ;
- si un échantillon de lait doit être prélevé, recueillir, pendant la décharge du lait vers un réservoir de lait en pompant la quantité de lait fournie par l'animal dans chaque séquence de traite selon des volumes prédéterminés à partir d'un compteur de lait jusqu'au réservoir de lait, une fraction prédéterminée de ces volumes dans un dispositif de prélèvement d'échantillons, et
- stocker les données de l'animal conjointement avec le moment où le prélèvement d'échantillons est effectué, dans la mémoire de l'ordinateur.

2. Méthode pour la traite, contrôlée automatiquement par ordinateur, d'animaux dans une salle de traite, dans laquelle des échantillons, de lait fourni par les animaux dans la salle de traite, peuvent être recueillis, la méthode comprenant les étapes successives consistant à :
- identifier un animal entrant dans une salle de traite ;
- utiliser le système d'identification d'animal pour rappeler les données d'une traite antérieure dudit animal à partir d'une mémoire d'ordinateur et déterminer au moyen de l'ordinateur, par exemple sur la base d'un emploi du temps, et desdites données, si un échantillon de lait doit être prélevé pour l'animal ; traire l'animal ;
- si un échantillon de lait doit être prélevé, recueillir, pendant la décharge du lait vers un réservoir de lait en pompant la quantité de lait fournie par l'animal dans chaque séquence de traite dans sa totalité à partir d'un compteur de lait jusqu'au réservoir de lait, une fraction prédéterminée de cette quantité de lait dans un dispositif de prélèvement d'échantillons, et
- stocker les données de l'animal conjointement avec le moment où le prélèvement d'échantillons est effectué, dans la mémoire de l'ordinateur.

3. Méthode selon la revendication 2, **caractérisée en ce que**, avant ou pendant l'opération de prélèvement d'échantillons, de l'air passe dans le lait contenu dans le compteur de lait.

4. Dispositif pour la traite automatique d'animaux en appliquant la méthode selon la revendication 1 ou 2 dans une salle de traite avec un système d'identification d'animal, un compteur de lait auquel est fourni le lait obtenu à partir d'un animal, et un réservoir de lait vers lequel est pompé le lait à partir du compteur de lait, **caractérisé en ce que** le dispositif est en outre pourvu d'un dispositif de prélèvement d'échantillons avec un ou une pluralité d'éléments de prélèvement d'échantillons, ce dispositif de prélèvement d'échantillons pouvant être connecté à un point de dérivation dans le lactoduc entre le compteur de lait et le réservoir de lait, et dans lequel dispositif de prélèvement d'échantillons, une fraction prédéterminée de la quantité de lait, fournie par l'animal dans chaque séquence de traite, selon des volumes prédéterminés à partir du compteur de lait au réservoir de lait, ou de la quantité de lait, fournie par l'animal dans chaque séquence de traite, dans sa totalité, à partir du compteur de lait au réservoir de lait, peut être recueillie.

5. Dispositif pour la traite automatique d'animaux selon la revendication 4, **caractérisé en ce qu'**un lactoduc intermédiaire est prévu entre le point de dérivation et le dispositif de prélèvement d'échantillons, ledit lactoduc intermédiaire comprenant un élément de commutation pour contrôler la fourniture de lait au dispositif de prélèvement d'échantillons.

6. Dispositif pour la traite automatique d'animaux selon la revendication 4 ou 5, **caractérisé en ce que** l'élément de récupération de lait du dispositif de prélèvement d'échantillons peut être rempli au moyen d'un élément d'injection connecté au dit lactoduc intermédiaire.

7. Dispositif pour la traite automatique d'animaux selon l'une quelconque des revendications 4 à 6, **caractérisé en ce que** le dispositif de prélèvement d'échantillons comprend un support rotatif comprenant une pluralité d'éléments de récupération de lait.

8. Dispositif pour la traite automatique d'animaux selon la revendication 7, **caractérisé en ce que** le support rotatif peut être servo-commandé dans des positions indiquées par un ordinateur.

9. Dispositif pour la traite automatique d'animaux selon la revendication 7, **caractérisé en ce que** les éléments de récupération de lait sont contenus dans un porteur qui peut être détaché du boîtier du support rotatif.

10. Dispositif pour la traite automatique d'animaux selon la revendication 7, **caractérisé en ce que** le dispositif de prélèvement d'échantillons peut être scellé et peut être attaché de manière amovible à un cadre du lieu de traite ou dans la salle de traite.
